# FASCICULE DE BREVET EUROPEEN

(11) **EP 0 613 996 B1**
(45) Date de publication et mention de la délivrance du brevet: **25.03.1998**
(21) Numéro de dépôt: 94400419.1
(22) Date de dépôt: 28.02.1994
(51) Int. Cl.: F01K 23/16, F01D 25/28

(54) **Centrale de production d'énergie à turbine à gaz et turbine à vapeur**
Kraftanlage mit einer Gasturbine und einer Dampfturbine
Power plant with a gas turbine and a steam turbine

(30) Priorité: 03.03.1993 FR 9302445
(43) Date de publication de la demande: 07.09.1994
(73) Titulaire: GEC ALSTHOM ELECTROMECANIQUE SA, 75016 Paris (FR)
(72) Inventeur: Rousselle, Jean-Claude, F-95470 Saint Witz (FR)
(74) Mandataire: Vigand, Privat

(56) Documents cités:
- EP-A- 0 407 132

## Description

La présente invention concerne une centrale de production d'énergie comportant un module turbine à gaz une turbine à vapeur avec partie haute pression et partie basse pression montée sur une même ligne d'arbres entraînant un alternateur disposé en bout de la ligne d'arbres, le module turbine à gaz comportant un stator muni d'une entrée d'air et d'un échappement muni d'un joint souple à sa sortie, ledit stator étant en appui sur un socle solidaire d'un massif par l'intermédiaire de supports à faible raideur de translation et étant solidaire d'autre part de la partie fixe d'une butée de la ligne d'arbres, la partie haute pression comportant un stator fixé au massif, la partie basse pression comportant un stator fixé au massif en un point de fixation situé du côté opposé à l'alternateur

Dans une centrale connue la partie fixe de la butée de la turbine à gaz est montée sur le massif et constitue le point fixe de la ligne d'arbres.

Les dilatations de cette ligne d'arbres sont importantes et entraînent une baisse de rendement.

Dans EP-A-407132, il est décrit une centrale à cycle combiné comprenant un module turbine à gaz et une turbine à vapeur avec partie haute pression et partie moyenne et basse pression montés sur une même ligne d'arbres entraînant un alternateur disposé en bout de la ligne d'arbres, le module turbine à gaz comportant un stator de turbine à gaz muni d'une entrée d'air et d'un échappement, le stator de turbine à gaz étant en appui sur un socle solidaire d'un massif par l'intermédiaire de supports à faible raideur de translation et étant solidaire d'autre part de la partie fixe d'une butée de la ligne d'arbres, la partie haute pression comportant un stator haute pression fixé sur le massif en un point situé du coté du module de turbine a gaz, la partie basse pression comportant un stator basse pression fixé sur le massif en un point de fixation situé du côté opposé à l'alternateur. Un tel agencement n'est pas favorable pour minimiser les dilatations.

La centrale selon l'invention permet de diminuer les dilatations le long de la ligne d'arbres unique. Elle est caractérisée en ce que le stator de la partie haute pression est fixé au massif en un point de fixation situé du côté opposé au module turbine à gaz et en ce que la ligne d'arbres est munie d'une butée dont la partie fixe est montée sur le massif et disposée entre les deux points de fixation des stators de la partie haute pression et de la partie basse pression.

Le point fixe de la ligne d'arbres est maintenant cette butée. Il s'ensuit que les dilatations de la ligne d'arbres vers l'extrémité portant l'alternateur sont diminuées. Les dilatations dans l'autre sens sont rattrapées par les supports à faible raideur et par le joint souple.

A la place de la partie haute pression, la turbine à vapeur pourrait comporter une partie haute et moyenne pression de même stator.

La présente invention permet donc d'améliorer le rendement des turbines tout en conservant l'avantage d'une seule ligne d'arbres, la possibilité de conserver un module alternateur unique pour des dispositions différentes des modules de la turbine à gaz et de la turbine à vapeur, choisies en fonction des cycles correspondant à la puissance désirée, mais en maintenant des jeux axiaux identiques à ceux qui existeraient si les machines tournantes étaient séparées l'une de l'autre avec chacune sa propre butée d'arbres.

Les supports à faible raideur de translation du module turbine à gaz sont munis de préférence d'amortisseurs des déplacements longitudinaux.

Il est décrit ci-après à titre d'exemple et en référence aux figures schématiques du dessin annexé, une centrale de production d'énergie à turbine à gaz et turbine à vapeur (dite " centrale à cycle combiné") connue et une selon l'invention.

La figure 1 représente l'ensemble de la centrale connue.

La figure 2 représente l'ensemble de la centrale selon l'invention.

La figure 3 est une vue à plus grande échelle de détail II de la figure 2 (amortisseur d'un appui de la turbine à gaz).

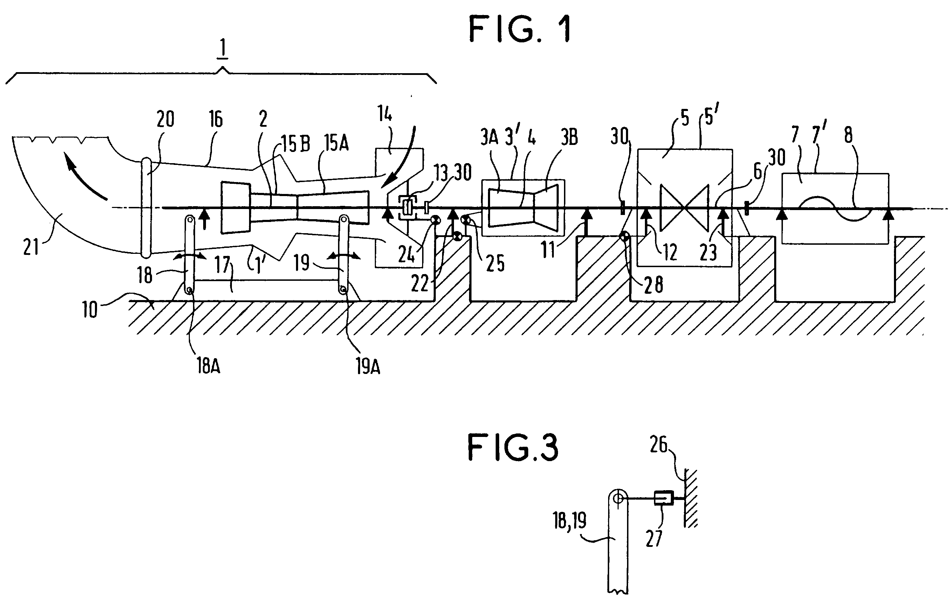

La centrale de la figure 1 se compose d'un module turbine à gaz 1 de stator 1' et d'arbre 2 et d'un module turbine à vapeur se décomposant en une partie haute et en moyenne pression 3A, 3B de stator 3' et d'arbre 4, et en une partie basse pression 5 de stator 5' et d'arbre 6. L'alternateur 7 de stator 7' et d'arbre 8 est disposé à l'extrémité opposée à celle de la turbine à gaz.

Dans une variante (non représentée) le stator 3' et l'arbre 4 ne définisse qu'une partie haute pression 3A, la moyenne pression 3B n'existant pas.

Les arbres 2, 4, 6 et 8 sont couplés par des dispositifs d'accouplement 30.

Le module turbine à gaz comporte une arrivée d'air 14, un compresseur 15A, la turbine proprement dite 15B et une chambre d'échappement 16. Le stator 1' du module 1 est en appui sur le socle 17 du massif 10 par l'intermédiaire de supports 18 et 19 de faible raideur longitudinale portés par des axes 18A, 19A ancrés dans le socle 17. Un joint souple 20 relie l'extrémité d'échappement de la turbine à gaz au conduit d'évacuation des gaz de combustion 21. La poussée des gaz d'échappement est transmise par l'arbre 2 à la butée 13 du module turbine à gaz.

La ligne d'arbres repose sur les supports fixes 22 situés entre la butée de turbine à gaz 13 et la partie haute pression de la turbine à vapeur, sur les supports fixes 11, 12 situés entre la partie moyenne pression et la partie basse pression, et sur les supports fixes 23 situés entre la partie basse pression et l'alternateur.

La partie fixe de la butée 13 du module turbine à gaz est intégrée à la structure de l'arrivée d'air 14 et solidarisée avec le massif 14 en un point 24.

Le stator 3' de la partie HP-MP est fixé à l'avant (du côté turbine à gaz) avec le massif 10 en 25.

Le stator 5' de la partie BP 5 et fixé à l'avant en un point de fixation 28 avec le massif 10.

Le stator 7' de l'alternateur 7 est fixé en plusieurs points (non représentés) sur le massif 10.

Le point fixe de la ligne d'arbres est donc la butée 13. Lorsqu'il se produit des dilatations celles-ci deviennent très importantes le long de la ligne d'arbres notamment au niveau de la partie BP5 et de l'alternateur 7.

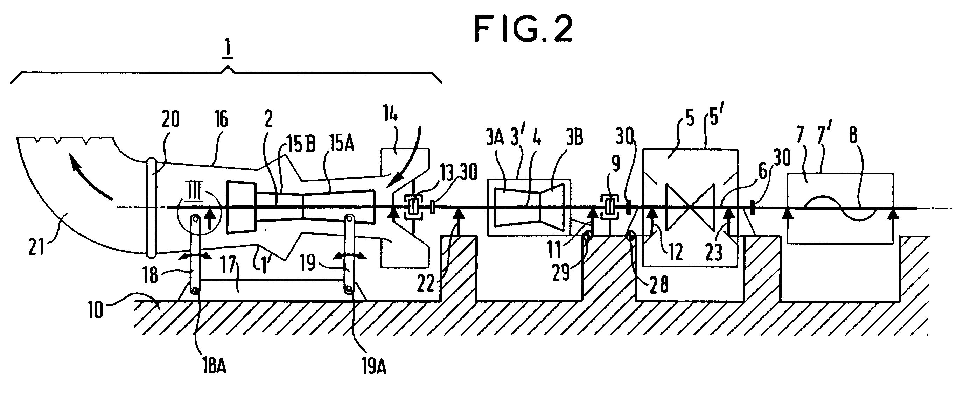

La figure 2 représente la centrale selon l'invention les mêmes références désignant les parties similaires de la figure 1.

Comme on le voit sur la figure 2 la partie fixe de la butée 13 du module turbine à gaz n'est plus solidarisée avec le massif. De même le stator 3' de la partie HP-MP n'est plus solidarisé à l'avant avec le massif.

Entre la partie HP-MP 3A-3B et la partie BP5 on a disposé sur la ligne d'arbre une butée 9.

Par ailleurs l'arrière du stator 3' est fixé en un point de fixation 29 au massif 10. Les points de fixation 29 et 28 sont situés de part et d'autre de la butée 9. Le point fixe de la ligne d'arbres est maintenant constitué par la butée 9. La ligne d'arbres se dilate dans les deux directions à partir de cette butée 9. Ainsi vers l'avant les dilatations de la ligne d'arbres influeront par l'intermédiaire de la butée 13 sur le stator 1' qui se déplacera vers la gauche en faisant jouer les supports 18, 19 et le joint 20.

Vers l'arrière il y aura également des dilatations de la ligne d'arbres mais celles-ci seront nettement moins importantes que celles de la centrale selon la figure 1, puisque la longueur de la ligne d'arbres à partir de la butée 9 est nettement moins importante que la longueur de la ligne d'arbres à partir de la butée 13.

Comme représenté en figure 3, les appuis souples tels que 18 et 19 du module turbine à gaz sont reliés à des parois fixes telles que 26 par des amortisseurs tels que 27, qui évitent des oscillations horizontales de ce module et par suite des fluctuations de poussée sur la butée 9 de la turbine à vapeur.

## Revendications

1. Centrale de production d'énergie comportant un module turbine à gaz (1) et une turbine à vapeur avec partie haute pression (3A) et partie basse pression (5) montés sur une même ligne d'arbres (2, 4, 6, 8) entraînant un alternateur (7) disposé en bout de la ligne d'arbres, le module turbine à gaz (1) comportant un stator (1') de turbine à gaz muni d'une entrée d'air (14) et d'un échappement (16) muni d'un joint souple (20) à sa sortie, ledit stator (1') de turbine à gaz étant en appui sur un socle (17) solidaire d'un massif (10) par l'intermédiaire de supports (18, 19) à faible raideur de translation et étant solidaire d'autre part de la partie fixe d'une butée (13) de la ligne d'arbres, la partie haute pression (3A) comportant un stator haute pression (3') fixé sur le massif (10) la partie basse pression (5) comportant un stator basse pression(5') fixé sur le massif (10) en un point de fixation (28) situé du côté opposé à l'alternateur (7),
caractérisée en ce que le stator haute pression(3') est fixé sur le massif (10) en un point de fixation (29) situé du côté opposé au module turbine à gaz (1) et en ce que la ligne d'arbres (2, 4, 6, 8) est munie d'une butée (9) dont la partie fixe est montée sur le massif (10) et disposée entre les deux points de fixation (28 et 29).

2. Centrale de production d'énergie selon la revendication 1 caractérisée en ce que la partie haute pression (3A)comprend une partie moyenne pression (3B).

## Patentansprüche

1. Kraftanlage mit einem Gasturbinenmodul (1) und einem Dampfturbinenmodul mit einem Hochdruckteil (3A) und einem Niederdruckteil (5), die auf demselben Wellenstrang (2, 4, 6, 8) angeordnet sind, der einen am Ende des Wellenstrangs angeordneten Generator (7) antreibt, wobei das Gasturbinenmodul (1) einen Gasturbinen-Stator (1') aufweist, der mit einer Luftzuführung (14) und einem eine elastische Verbindung (20) an seiner Austrittsöffnung aufweisenden Auslaß (16) versehen ist, und der Gasturbinen-Stator (1') mit Hilfe von Trägern (18, 19) mit geringer Verschiebesteifigkeit auf einem mit einem Fundament (10) fest verbundenen Sockel (17) gelagert und andererseits mit dem feststehenden Teil eines Lagers (13) des Wellenstrangs fest verbunden ist, wobei der Hochdruckteil (3A) einen an dem Fundament (10) befestigten Hochdruckstator (3') und der Niederdruckteil (5) einen an einer sich auf der dem Generators (7) abgewandten Seite befindenden Verankerungsstelle (28) an dem Fundament (10) befestigten Niederdruckstator (5') aufweist, **dadurch gekennzeichnet,** daß
der Hochdruckstator (3') an einer sich auf der dem Gasturbinenmodul (1) abgewandten Seite befindenden Verankerungsstelle (29) am Fundament (10) befestigt ist und daß der Wellenstrang (2, 4, 6, 8) mit einem Lager (9) versehen ist, dessen feststehender Teil am Fundament (10) befestigt ist und sich zwischen den beiden Verankerungsstellen befindet.

2. Kraftanlage nach Anspruch 1, dadurch gekennzeichnet, daß der Hochdruckteil (3A) einen Mitteldruckteil (3B) aufweist.

## Claims

1. A power plant comprising a gas turbine module (1) and a steam turbine having a high pressure portion (3A), and a low pressure portion (5) mounted on the same shaft line (2, 4, 6, 8) that drives an alternator (7) disposed at the end of the shaft line, the gas turbine module (1) including a gas turbine stator (1') provided with an air inlet (14) and with an exhaust (16) provided with a flexible gasket (20) at its outlet, said gas turbine stator (1') being supported by a base (17) secured to a foundation (10) by means of supports (18, 19) having low stiffness in translation, and also being secured to the stationary portion of an abutment (13) of the shaft line, the high pressure portion (3A) of the steam turbine including a high pressure stator (3') fixed to the foundation (10), and its low pressure portion (5) including a low pressure stator (5') fixed to the foundation (10) via a fixing point (28) that is situated at its end that is remote from the alternator (7),
characterized in that the high pressure stator (3') is fixed to the foundation (10) via a fixing point (29) situated at its end that is remote from the gas turbine module (1), and in that the shaft line (2, 4, 6, 8) is provided with an abutment (9) whose stationary portion is mounted on the foundation (10) and is disposed between the said two fixing points (28 and 29).

2. A power plant according to claim 1, characterized in that the high pressure portion (3A) includes a medium pressure portion (3B).
